# EUROPEAN PATENT SPECIFICATION

(11) **EP 1 394 169 B1**
(45) Date of publication and mention of the grant of the patent: **18.04.2007**
(21) Application number: 02019366.0
(22) Date of filing: 29.08.2002
(51) Int. Cl.: C07F 15/00

(54) **Organometallic complex**
Organometallkomplex
Complexe organométallique

(43) Date of publication of application: 03.03.2004
(73) Proprietor: Hwu, Jih-Ru, Shin-Chu (TW); Tsay, Shwu-Chen, Taipei (TW)
(72) Inventor: Hwu, Jih-Ru, Shin-Chu (TW); Tsay, Shwu-Chen, Taipei (TW); Lu, Kuang-Lieh, Taipei (TW); Huang, Jiann-Jyh, Lo-Tung Town, I-Lan County (TW); Hung, Jui-Te, Neihu, Taipei (TW); Yu, Sheng-Fa, Pa-De, Taoyuan (TW)
(74) Representative: Fleuchaus, Leo

(56) References cited:
- EP-A- 0 258 655
- WO-A-89/09598
- KAPLAN, SAVELII F. ET AL: "Metal-mediated and solvent dependent chlorination of the nitrosonaphtholato ligand" JOURNAL OF THE CHEMICAL SOCIETY, DALTON TRANSACTIONS (2001), (22), 3279-3284 , XP002219799
- Boundny V. et al: 'Biophysical analysis of DNA modified by 1,2-diaminocyclohexane platinum(II) complexes', Nucleic Acids Research, Vol 20, Issue 2; pages 267-272; 1992 (abstract)
- PENDYALA L. ET AL: 'Cytotoxicity, cellular accumulation and DNA binding of oxaliplatin isomers' CANCER LETTERS vol. 97, no. 2, 1995, pages 177 - 184

## Description

### BACKGROUND

Transition metal complexes that can cleave DNA are widely known as "chemical nucleases." See, e.g., Pyle & Barton (1990) *Prog*. *Inorg. Chem*. 38: 413; Sigman *et al.* (1987) *Acc. Chem. Res.* 26: 98; and Stubbe & Kozarich (1987) *Chem. Rev*. 87: 1107. These complexes strongly bind to DNA and then cleave it under various conditions. For example, a transition metal complex can cleave DNA upon linking to a DNA-cleaving motif, e.g., acridine orange (Lippard *et al.* (1984) *J. Am. Chem. Soc*. 106: 6102); upon X-ray irradiation (Grokhovsky & Zubarev (1991) *Nucl. Acids Res.* 19: 257); or under photolytic conditions (Rudnicki *et al.* (1991) *Bioorg. Med. Chem. Lett.* 1: 451; or Thorp *et al*. (1995) *J. Am. Chem*, *Soc.* 117:11673).

In addition, the just-described transition metal complexes may possess anticancer activity. See, e.g., Bruhn *et al.* (1987) *Prog. Inorg. Chem*. 38: 477*;* and Sherman & Lippard (1987) *Chem. Rev.* 87: 1153. For example, cisplatin and carboplatin (i.e., platinum complexes) have been routinely used for treating testicular and ovarian cancers (Christian (1992) *Semin. Oncol.* 19: 720; and Barnard (1989) *J. Plat. Met. Rev.* 33: 162). In addition, many cisplatin derivatives have been developed as new anticancer reagents with less toxic side effect and reduced resistance. See Reedijk (1996) *J. Chem. Soc., Chem. Commun.* 801; and Hambley (1997) *Coord. Chem. Rev.* 166: 181. WO 89/09598 describes anti-cancer active dach-Pt complexes.

### SUMMARY

This invention relates to a transition metal complex useful as a nucleic acid binding or cleaving agent.

This invention features a metal complex of the formula: 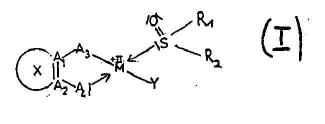 wherein
M is Pt; Pt;
X is pyridinyl;
Y is halogen, tosylate, mesylate, triflate, pyrophosphate, or carboxylate;
A₁ is C, A₂ is N, A₃ is S, and A₄ is O;
and each of R1 and R2 is independently alkyl, aryl, heteroaryl, alkoxyl aryloxyl, heteroaryloxyl, alkoxylcabonyl, aryloxylcarbonyl or heteroaryloxylcarbonyl.

One exemplary metal complex of this invention is PtCl(DMSO)[η²⁻C₅H₄SN(O)]:

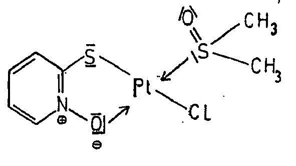

Alkyl, aryl, heteroaryl, cyclyl, heterocyclyl, alkoxyl, aryloxyl, heteroaryloxyl, alkoxylcarbonyl, aryloxylcarbonyl, or heteroaryloxylcarbonyl mentioned above refers to both substituted and unsubstituted moieties. As used herein, alkyl is a straight or branched hydrocarbon chain containing 1 to 6 carbon atoms. The term "substituted" refers to one or more substituents (which may be the same or different), each in replace of a hydrogen atom. Examples of substituents include, but are not limited to, halogen, hydroxyl, amino, cyano, nitro, C₁-C₆ alkyl, C₁-C₆ alkenyl, C₁-C₆ alkoxyl, acryl heteroaryL or heterocyclyl, wherein alkyl, alkenyl, alkoxy aryl, heteroaryl and heterocyclyl are optionally substituted with C₁-C₆ alkyl, aryl, heteroaryl, halogen, hydroxyl, amino, alkylamino, arylamino, dialkylamino, diarylamino, cyano, or nitro. The term "aryl" refers to a hydrocarbon ring system having at least one aromatic ring. Examples of aryl moieties include, but are not limited to, phenyl, naphthyl, and pyrenyl. The term "heteroaryl" refers to a hydrocarbon ring system having at least one aromatic ring which contains at least one heteroatom such as O, N, or S. Examples of heteroaryl moieties include, but arc not limited to, pyridinyl, carbazolyl, and indolyl.

This invention also features a method for binding or cleaving a nucleic acid. The method includes contacting the nucleic acid with one or more metal complexes described above. Cleavage of the nucleic acid can be achieved by UV irradiation of the metal complex-bound nucleic acid. The nucleic acid described herein refers to a purine-containing DNA or RNA. It can be single-stranded, double-stranded, or partially single-stranded and partially double-stranded. In some embodiments, the method of this invention is performed in an aqueous buffer having a pH value which ranges from 5 to 8. A cleavage can be carried out by using UV light having a wavelength >300 nm.

Other features, objects, and advantages of the invention will be apparent from the description and from the claims.

### DETAILED DESCRIPTION

This invention relates to a transition metal complex and its use as a nucleic acid binding or cleaving agent. The metal complex of this invention can be prepared by well-known method including the synthetic routes disclosed herein.

For example, a metal complex can be prepared by adding a mercapto, oxide-substituted heteroaryl to a solution containing K₂PtCl₄. The addition is carried out in the dark. Subsequently, R₁, R₂-substituted sulfoxide is added to the solution to produce the desired metal complex. The product can be purified by column chromatography. Shown below is a scheme that depicts synthesis of a metal complex of this invention (e.g., complex 1; see the box in the scheme).

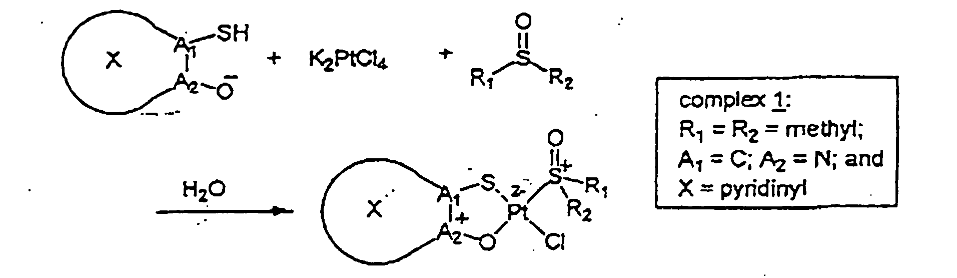

A transition metal complex of this invention can be used as a nucleic acid binding or cleaving agent. Typically, it binds to the heteroaryl ring of a purine on the nucleic acid. The binding can be coordination between the transition metal and a heteroatom, such as nitrogen. Take complex 1 for example. It specifically binds to the C-6 amino on an adenine. Without UV irradiation, a mass spectrometry analysis shows no sign of nucleic acid cleavage resulting from the binding. Upon UV irradiation, an intramolecular cyclization takes place, leading to nucleic acid cleavage. Moreover, the transition metal complex also targets a guanine in the presence of an external base (e.g., piperidine). Not only does the complex specifically bind to the C-2 amino on the guanine, a cleavage reaction also occurs with the assistance of the external base under UV irradiation. See the specific examples below.

A cleaved nucleic acid product (nicked nucleic acid) contains at least one break, wherein two adjacent bases are not covalently linked. It can be detected using denaturing polyacrylamide gels (Molecular Cloning, 2^{nd} Ed. Sambrook *et al*. eds. Cold Spring Harbor Laboratory Press, 1989). Gel electrophoresis can also separate and detect a nicked nucleic acid which has been tagged with a fluorescent or radioactive labeL

A transition metal complex of this invention can bind to and cleave a nucleic acid (e.g., DNA) *in vivo*. It is well known that selective interactions of a metal complex with cellular DNA result in death of tumor cells. For reviews, see Reedijk (1992) *Inorganica Chimica Acta* 198-200: 873; and Wong & Giandomenico (1999) *Chem Rev* 99:2451. This invention, therefore, covers a pharmaceutical composition for treating tumor that contains an effective amount of at least one transition metal complex described in the "Summary" section and a pharmaceutical acceptable carrier.

Further, the afore-mentioned transition metal complex can also serve as a nucleic acid scissors to produce short nucleic acid fragments. A variety of new techniques such as mass spectrometry and microarrays utilize short nucleic fragments in nucleic acid analysis or sequencing. See, e.g., Nordhoff(1996) *Trends Anal. Chem.* 15:240; Ramsay (1998) *Nat*. *Biotechnol.* 16: 40; and Marshall & Hodgson (1998) *Nat. Biotechnol* 16: 27. Therefore, the transition metal complexes of this invention are useful for these new techniques. For example, the complex can be used in a gene chip for detecting cancer or virus diseases.

The specific examples below are to be construed as merely illustrative, and not limitative of the remainder of the disclosure in any way whatsoever. Without further elaboration, it is believed that one skilled in the art can, based on the description herein, utilize the present invention to its fullest extent.

### Synthesis of organoplatinum complex PtCl(DMSO)[η²-C₅H₄SN(O)]

To a solution of sodium 2-mercaptopyridine *N*-oxide in N,N-dimethylformamide (10 mL), K₂PtCl₄ (415 mg, 1.00 mmol) in 100 mL aqueous solution was slowly added within 1.0 h in the dark. Subsequently, dimethyl sulfoxide (DMSO, 1.0 mL) was added into the solution and stirred for 3 days. The solvents in the solution were removed under reduced pressure and a product was obtained. The product was purified by using column chromatography packed with silica gel (100% CH₂Cl₂ as eluant) to produce [Pt(CI)(DMSO)(η²-C₅H₄SN(O))] (complex 1) as yellow powder (408 mg, 0.940 mmol, 94% yield).

Elemental Analysis for PtC₇H₁₀NO₂S₂: Calculated: C, 19.34; H, 2.32; N, 3.22. Found: C, 19.56; H, 2.18; N, 3.10.

MS (FAB, ¹⁹⁵Pt,³⁷Cl) m/z: 436 (M⁺), 399 (M⁺- Cl), 305 (M⁺- L).

Crystallographic data: two molecules composed the unit cell, C₁₄H₂₀C₁₂N₂O₄S₄Pt₂:
M= 869.64, triclinic, space group *P*1, the lattice constants
*α* = 10.249 (3) Å, *b* = 10.963 (5) Å, *c*= 11.083 (3) Å,
*α* = 82.71(3)°, β = 76.183(21)°, γ = 76.64(3)°,
V =1171.1(7) Å³, Z = 2, Dc = 2.462 g cm⁻³, T = 298 K,
λ = 0.71069 Å, µ (Mo/Ka) = 12.6336 nm⁻¹,
Enraf-nonius CAD4-diffractometer, 2θₘₐₓ = 45.0°,
3259 refections measured, 1861 were considered observed (R = 0.057, ωR (F²) = 0.059).

The [Pt(Cl)(DMSO)(η²-C₅H₄SN(O))] structure was also identified by single crystal X-ray diffraction analysis. The 1-hydroxypyridine-2-thione donated three electrons in total to coordinate with a Pt metal atom, i.e., the thiolate center contributed one electron and the oxygen atom offered two electrons.

### Single-strand DNA cleavage

*Cleavage at various pH's:* A reaction mixture (10µL) containing supercoiled circular *φX174* RFI DNA stock solution (50 µM/base pair), complex 1 (5.0 µM), and a phosphate buffer (0.10 M, pH 5.0, 6.0, 7.0, and 8.0) in a Pyrex vial was preincubated at 37°C. The reaction mixture was then irradiated with 350 nm UV light (32-W) for 2.0 h at room temperature. After adding a gel-loading buffer (025% bomophenol blue, 0.25% xylene cyanol, and 30% glycerol), the reaction mixture was loaded on a 1% agarose gel, followed by ethidium bromide staining. The gel was visualized by a 312-nm UV transilluminator and photographed by a FB-PDC-34 camera. Supercoiled circular DNA and cleaved DNA were clearly seen from the geL The results showed that only cleaved DNA was observed when the reaction mixture had a pH of 5.0, 6.0, or 7.0, and both supercoiled circular DNA and cleaved DNA were observed when the reaction mixture had a pH of 8.0.

*Cleavage at various complex concentrations:* A reaction mixtures (10 µL) containing supercoiled circular *φX174* RFI DNA stock solution (50 µM/base pair), complex 1 (0.050-100 µM), and a phosphate buffer (0.10 M, pH 6.0) in a Pyrex vial was preincubated at 37°C. The mixture was irradiated with 350 mm UV light (32-W) for 2.0 h at room temperature. After adding a gel-loading buffer (0.25% bromophenol blue, 0.25% xylene cyanol, and 30% glycerol), the reaction mixture was loaded on a 1% agarose gel, followed by ethidium bromide staining. The gel was visualized by a 312-nm UV transilluminator and photographed by a FB-PDC-34 camera. Supercoiled circular DNA (form I) and cleaved DNA (form II) were clearly seen from the gel. The results are summarized in Table 1:

**Table 1. Single-strand supercoiled circular øX174 RFI cleavage with complex 1**

| complex | concentration (µM) | (% form I) | (% form II) | % form II)/ (% form I) |
|---|---|---|---|---|
| none | | 91 | 9.0 | 0.10 |
| 1^{α} | 500 | 93 | 7.0 | 0.070 |
| 1 | 5.0 | 7.1 | 93 | 13 |
| 1 | 2-3 | 20 | 80 | 4.0 |
| 1 | 1.0 | 37 | 63 | 1.7 |

| | | | | |
|---|---|---|---|---|
| ^{α}In the dark. | | | | |

The results showed that complex 1 cleaved DNA in a pH-dependent manner (pH 5.0-8.0), and favored acidic conditions (pH 5.0-7.0). Unexpectedly, this metal complex exhibited very strong DNA cleaving activity even at a concentration as low as 1.0 µM. Furthermore, the cleavage of single-strand DNA did not occur in the dark.

### Site-Specific DNA cleavage

A 160-bp dsDNA fragment was prepared from the 501-660 fragment of pBR322 DNA. It was amplified by the polymerase chain reaction (Bailly & Waring (1995) *J. Am. Chem. Soc.* 117:7311; Bailly *et al.* (1993) *J. Am Chem. Soc.* 115: 3784; and Sayers & Waring (1993) *Biochemistry* 32: 9094), and labeled at the 5'-terminus with γ-[³²P]-ATP and T4 polynucleotide kinase. A reaction mixture containing a 5'-terminus labeled ³²P-DNA solution, a phosphate buffer (0-10 M, pH 6.0), and complex 1 (20-100 µM) in a Pyrex vial was preincubated at 37°C for 30 min. The reaction mixture was irradiated with 350-nm UV light under aerobic conditions for 2.0 h at room temperature. The bound metal complexes on DNA fragments were removed by using 0.30 N NaCN (pH = 11) at 37°C for 8.0 h (Schwartz *et al.* (1990) *J. Am. Chem. Soc.* 112: 3673; and Zou *et al*. (1994) *Biochemistry* 33: 5404). The reaction mixture was then quenched with either a gel-loading buffer or 95% ethanol. Some samples subjected to piperidine treatment were precipitated by addition of ethanol and resuspended in an aqueous piperidine solution (1.0 M, 60 µL) at 95°C for 30 min. Subsequently, all samples were sequentially lyophilized, treated with water (30 µL), lyophilized, and resuspended in a gel-loading buffer (80% foramide, 0.25% bromophenol blue, and 0.25% xylene cyanol). The samples and the Maxam-GiIbert markers were analyzed using 10% polyacrylamide/8.0 M urea geL The electrophoresis was performed at a voltage of 300 V for 60 min and raised to 600 V for another 8.0 h. The gel was visualized using Kodak X-Omat Ar-5 film in an intensifying screen, which was exposed at -70°C for 24 h. Quantitation of relative intensities of DNA fragments was performed using a Microtek scanner and NIH 1.60 image program.

The detected DNA fragments were compared with Maxam-Gilbert markers on an autoradiogram, and quantitated by a computer-assisted program. The results showed that complex 1 cleaved DNA at purine residues with hot piperidine treatment (Armitage (1998) *Chem. Rev.* 98: 1171) and at adenine residues without piperidine treatment.

### DNA binding and cleaving mechanisms

A double helical oligonucleotide d(ATAT)₂ was prepared and added to a phosphate buffer solution (pH = 6.0) containing complex 1 (1:1). The solution was kept in the dark for 2.0 h. An intermediate was detected, at a yield of 57%, with a signal at 650.1 for (M + H⁺) as analyzed by an electron spray ionization detector in LC-mass chromatogram. Then, the solution was irradiated with 350 nm-UV light for 2.0 h at room temperature. A product was detected with a signal at 456.1 for (M + H⁺). The results indicated that complex 1 first bound to the C-6 amino on an adenine to form the intermediate. Then an intramolecular cyclization took place to remove the DMSO and to form a covalent bond between the N-7 nitrogen atom and the platinum in complex 1, resulting in the oligonucleotide cleavage. The control experiment showed that the cleavage reaction was triggered by the UV irradiation.

The scheme below depicts the just-described reaction:

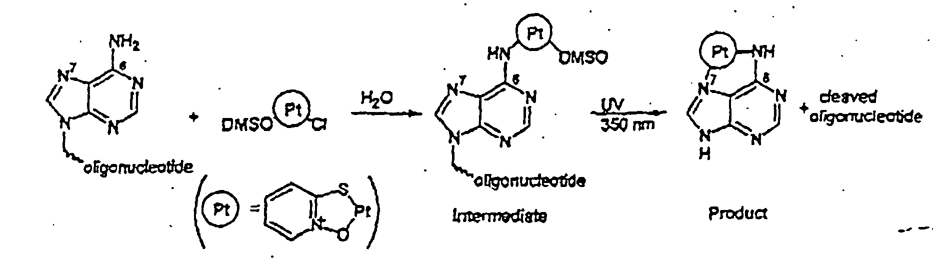

As a comparison, a reaction involving 2'-deoxyguanosine and complex 1 was carried out. Complex 1 bound to the C-2 amino on a guanine to form a Pt-N covalent bond. An intramolecular cyclization did not occur due to the distance and geometrical disfavor between the Pt and the N-7 nitrogen atom of guanine. As a result, cleavage at a guanine site required assistance from an external base (e.g., piperidine). In another experiment, an excess of complex 1 was added to a 2'-deoxyguanosine solution, followed by piperidine treatment. An intermediate was detected, at a yield of 42%, with a signal at 1063.9 for (M + H⁺) as analyzed by an electron spray ionization detector in LC-mass chromatogram. The intermediate was able to give a cyclization product, at a yield of 80%, with a signal at 792.0 for (M + H⁺) upon 350-nm UV light irradiation, but not in the dark. The scheme below depicts the just-described reaction:

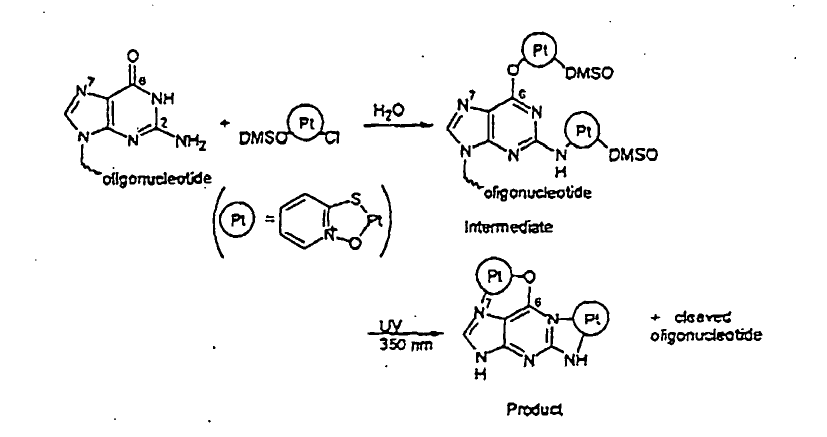

The above results indicated that complex 1 was an efficient DNA binder or potent cleaver under control conditions; and UV light functioned as a trigger to initiate the cleavage at the purine residues.

## Claims

1. A metal complex of the formula 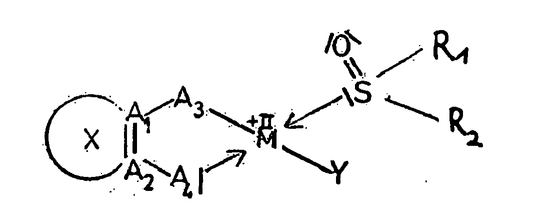 wherein
M is Pt;
X is pyridinyl;
Y is halogen, tosylate, mesylate, triflate, pyrophosphate, or carboxylate;
A₁ is C, A₂ is N, A₃ is S, and A₄ is O;
and each of R1 and R2 is independently alkyl, aryl, heteroaryl, alkoxyl aryloxyl, heteroaryloxyl, alkoxylcarbonyl, aryloxylcarbonyl, or heteroaryloxylcarbonyl.

2. The metal complex of claim 1, wherein Y is halogen.

3. The metal complex of claim 1, wherein each of R₁ and R₂ is alkyl.

4. The metal complex of claim 1, wherein the metal complex is of the formula:

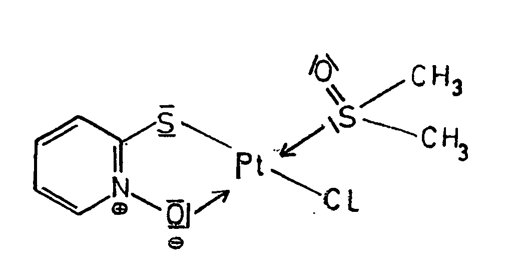

5. Composition comprising the metal complex according to any of the claims 1 or 4 and further comprising a pharmaceutical acceptable carrier.

6. The metal complex according to any of the claims 1 to 4 or the compositions according to claim 5 for use as a medicament.

7. Use of the metal complex according to any of the claims 1 to 4 or the composition according to claim 5 for the preparation of the medicament for the treatment of tumors.

## Patentansprüche

1. Ein Metallkomplex der Formel 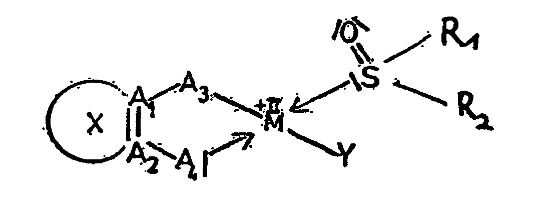 wobei
M Pt ist;
X ein Pyridinyl ist;
Y ein Halogen, Tosylat, Mesylat, Triflat, Pyrophosphat oder Carboxylat ist;
A₁ ist C, A₂ ist N, A₃ ist S und A₄ ist O;
und R₁ und R₂ unabhängig voneinander Alkyl, Aryl, Heteroaryl, Alkoxyl, Aryloxyl, Heteroaryloxyl, Alkoxylcarbonyl, Aryloxylcarbonyl oder Heteroaryloxalcarbonyl sind.

2. Der Metallkomplex gemäß Anspruch 1, wobei Y ein Halogen ist.

3. Der Metallkomplex gemäß Anspruch 1, wobei R₁ und R₂ jeweils ein Alkyl sind.

4. Der Metallkomplex gemäß Anspruch 1, wobei der Metallkomplex die Formel hat:

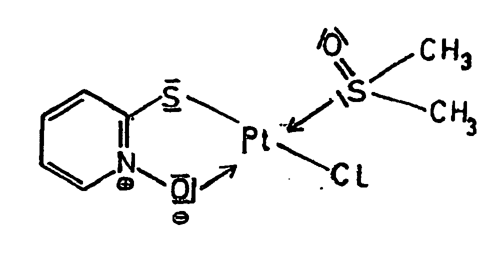

5. Zusammensetzung enthalten den Metallkomplex gemäß einem der Ansprüche 1 bis 4 und weiterhin enthaltend einen pharmazeutisch annehmbaren Träger.

6. Metallkomplex gemäß einem der Ansprüche 1 bis 4 oder Zusammensetzung gemäß Anspruch 5 zur Verwendung als Medikament.

7. Verwendung des Metallkomplexes gemäß einem der Ansprüche 1 bis 4 oder der Zusammensetzung gemäß Anspruch 5 zur Herstellung eines Medikaments zur Behandlung von Tumoren.

## Revendications

1. Un complexe métallique de formule 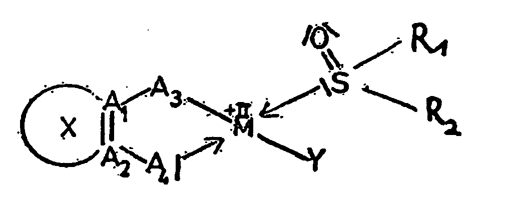
où M est Pt ;
X est un pyridinil
Y est un halogène , tosylate, mésylate, triflate, pyrophosphate ou carboxylate ;
A1 est C, A2 est N, A3 est S, et A4 est O ;
Et chacun de R1 et R2 sont indépendamment l'un de l'autre alkyle, aryle, hétéroaryle, alkoxyle aryloxyle, hétéroaryloxyle, alkoxycarbonyle, aryloxycarbonyle ou hétéroaryloxycarbonyle.

2. Le complexe métallique de la revendication 1, où Y est un halogène.

3. Le complexe métallique de la revendication 1, où chacun de R1 et R2 est un alkyle.

4. Le complexe métallique de la revendication 1, où le complexe métallique est de formule :

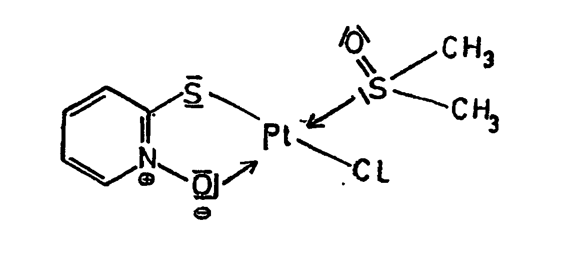

5. Composition comprenant le complexe métallique selon l'une quelconque des revendications 1 à 4 et comprenant de plus un porteur pharmaceutique acceptable.

6. Le complexe métallique selon l'une des revendications 1 à 4 ou la composition selon la revendication 5 pour utilisation comme un médicament.

7. Utilisation du complexe métallique selon l'une des revendications 1 à 4 ou la composition selon la revendication 5 pour la préparation du médicament pour le traitement de tumeurs.
